# EUROPEAN PATENT SPECIFICATION

(11) **EP 2 040 494 B1**
(45) Date of publication and mention of the grant of the patent: **14.11.2012**
(21) Application number: 08164580.6
(22) Date of filing: 18.09.2008
(51) Int. Cl.: H04L 29/06, H04W 4/06, H04L 12/18

(54) **Method and system for network multimedia conference access**
Verfahren und System für den Netzwerk-Multimedia-Konferenzzugriff
Procédé et système d'accès de conférence multimédia sur un réseau

(30) Priority: 18.09.2007 CN 200710153037
(43) Date of publication of application: 25.03.2009
(73) Proprietor: Huawei Technologies Co., Ltd., Longgang District, Shenzhen Guangdong 518129 (CN)
(72) Inventor: Yuan, Hongjin, Shenzhen Guangdong 518129 (CN); Li, Yang, Shenzhen Guangdong 518129 (CN); Hu, Haihua, Shenzhen Guangdong 518129 (CN); Fan, Gaofeng, Shenzhen Guangdong 518129 (CN); Wang, Min, Shenzhen Guangdong 518129 (CN)
(74) Representative: Thun, Clemens

(56) References cited:
- US-A1- 2004 006 623
- JOHNSTON A. , LEVIN O.: "Session Initiation Protocol (SIP) Call Control - Conferencing for User Agents" RFC 4579, [Online] August 2006 (2006-08), pages 1-43, XP002513495 Retrieved from the Internet: URL:www.ietf.org> [retrieved on 2009-02-04]
- MAHY R., CAMPBELL B.: "A Call Control and Multi-party usage framework for the Session Initiation Protocol SIP" DRAFT-IETF-SIPPING-CC-FRAMEWORK-07, [Online] 4 March 2007 (2007-03-04), pages 1-40, XP002513496 Retrieved from the Internet: URL:www.ietf.org> [retrieved on 2009-02-04]

## Description

### FIELD OF THE INVENTION

The present invention relates to a network multimedia conference technology, in particularly, to a network multimedia conference access method, and a system according to the appended independent claims.

### BACKGROUND

At present, along with development of network multimedia communication technology, in consideration of traffic safety, time, and cost, more and more people give up conventional face-to-face communication method. Meanwhile, a network multimedia conference system involving voices, videos, and data has become a widely used communication tool, with which people may participate in important conferences held far way without going out or even on their own desks, thereby saving a large amount of time and money.

The Next Generation Network (NGN) technology has been gradually developed, with a result that NGN-based new services become more and more diversified. The network multimedia conference systems which are implemented by powerful control capability of devices such as switch controllers and application servers (AS) emerge. Most of the network multimedia conference systems are based on a Session Initialize Protocol (SIP). When a host begins a conference, a host number, a conference identification (ID), and a conference state of each conference are registered on the AS.

Regarding a conventional conference access method, in order to access a conference, a terminal firstly must dial a conference access code, and the conference access code is a trigger number preset in the switch controller and capable of triggering a call request to the AS. Once the switch controller determines that a called number in the call request is the preset conference access code, the switch controller triggers the call request to the AS. After receiving the call request from the switch controller, the AS notifies a calling terminal to input the conference ID according to corresponding prompts. After the terminal inputs the conference ID, the AS controls the calling terminal to access the conference.

In the process of implementing the present invention, the inventor has found the following defects in the prior art. Under such a conference access method, the terminal must know the conference access code and the conference ID before gaining access to the conference. However, multiple conference systems may exist in network, each system possibly has different conference access codes, and the conference IDs are generated by the system at random which are meaningless. These numbers are verbose, so it is difficult to remember the conference access codes and the conference IDs, and participants must review relevant information including the conference access codes and the conference IDs repeatedly. In another aspect, the terminal receiving a conference notice, such as a mail box, and the terminal participating in the conferences, such as a telephone, are generally different, which means that not all of the participants can review the conference notice in time; as a result, the participants cannot gain access to the conference conveniently and rapidly.

US-A-2004/0006623 discloses a method for allowing a user with many types of terminals to be reachable everywhere by determining whether the status of a called party met the trigger condition; providing a caller terminal user a list of all linked HTTP URIs (Uniform Resource Identifier) corresponding to services available and then handling according to the called terminal's selection by an application server if the determining is yes.

An article named <RFC4579: Session Initiation Protocol (SIP) Call Control- Conferencing for User Agents> discloses a method for accessing to a conference by authenticating a user that requires for joining a conference hosted by a focus through dialling the conference URI; and sending a signal INVITE with the request-URI set to the conference URI if the user passing the authentication.

### SUMMARY

The present invention aims to provide a network multimedia conference access method and a corresponding system, which may enable participants to gain access to a conference conveniently and rapidly.

In order to achieve the aforementioned objective, the technical solutions of the embodiments of the present invention are as follows.

The present invention provides a network multimedia conference access method, according to claim 1.

The present invention provides a network multimedia conference access system according to claim 4.

Advantageous features are defined in the dependent claims.

Seeing from the technical solution, the present invention presets a determination logic of triggering to the control server the call request to the host terminal in the switch controller. When the switch controller determines that the called user ID in the call request is a user ID of the conference host terminal, the call is triggered to the control server. The control server determines whether the host terminal is holding a conference. If the host terminal is holding a conference, the control server directly adds the calling terminal to the conference being held by the host terminal. Or if the control server determines that the host terminal is holding the conference, the control server connects the incoming call to the host terminal and requests the host terminal to select whether to connect the calling terminal to the conference. Thereby, a user may be added to the conference by directly calling the host user ID, so that the user may gain access to the conference more rapidly and conveniently, without dialing verbose and irregular conference access codes and conference IDs.

### BRIEF DESCRIPTION OF THE DRAWINGS

Figure 1 is a system structural view of a network multimedia conference access system according to a first embodiment of the present invention;

Figure 2 is a flow chart of a conference access method according to the first embodiment of the present invention;

Figure 3 is a system structural view of a network multimedia conference access system according to a second embodiment of the present invention;

Figure 4 is a flow chart of a conference access method according to the second embodiment of the present invention; and

Figure 5 is a branch flow chart of the conference access method according to the second embodiment of the present invention.

### DETAILED DESCRIPTION

In order to make the objectives, technical solutions and advantages of the present invention more apparent, embodiments accompanied with figures are described in detail below.

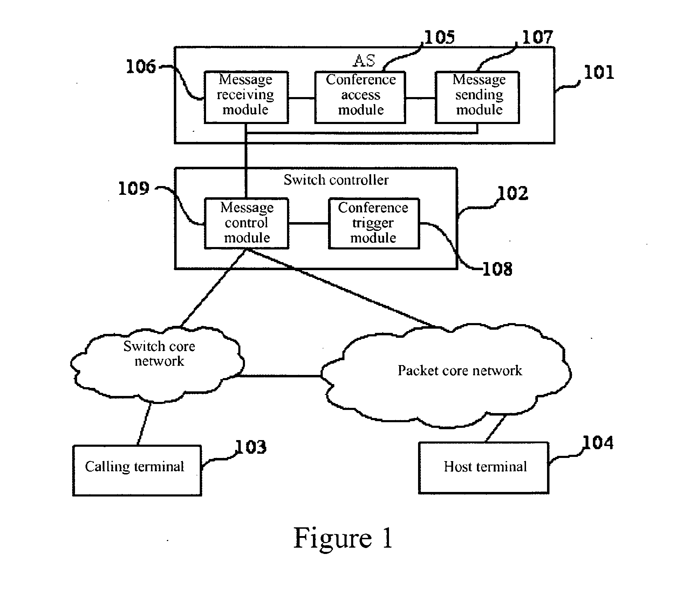

Figure 1 is a structural view of a network multimedia conference access system according to a first embodiment of the present invention, in which the network multimedia conference access system includes an AS101 and a switch controller 102.

A calling terminal 103 is connected to the switch controller 102 through a switch core network. A host terminal 104 is connected to the switch controller 102 through a packet core network. The switch controller 102 is connected to the AS101. The switch core network is a home public land mobile network, a public switched telephone Network, an NGN, or a combination thereof. The packet core network is the Internet, a wide area network, a local area network, or a combination thereof.

The calling terminal 103 may be a terminal functioning like a telephone such as a common fixed telephone or a mobile telephone, and is adapted to send a call request to the switch controller 102.

The host terminal 104 not only functions like a common telephone, but also servers as a host of a conference to hold a conference.

The switch controller 102 is adapted to connect a call and forward a message, and set in advance the number of the host terminal 104 as a trigger number capable of sending the call request to the AS101. The switch controller 102, after determining that a called number in the received call request is the preset number of the host terminal 104, sends the call request to the AS 101, and otherwise, sends the call request to the called terminal. The switch controller 102 receives an instruction of connecting the calling terminal to the conference controlled by the host terminal sent by the AS101, and connect the calling terminal 103 to the conference controlled by the host terminal 104.

The AS 101 determines whether the host terminal 104 corresponding to the called number in the call request sent by the switch controller 102 is holding a conference. If the host terminal 104 is holding a conference, the AS 101 sends an instruction of connecting the calling terminal to the conference controlled by the host terminal to the switch controller 102; and if the host terminal 104 is not holding a conference, the AS 10 sends an instruction of connecting the calling terminal with the called terminal to the switch controller 102.

The AS 101 further includes a conference access module 105, a message receiving module 106, and a message sending module 107.

The conference access module 105 is adapted to control a conference access flow and determine whether the host terminal 104 corresponding to the called number in the call request received by the message receiving module 106 is holding a conference according to stored host IDs, conference IDs, and the conference state information of the conferences. If the host is holding a conference, the conference access module 105 sends an instruction of connecting the calling terminal to the conference controlled by the host terminal to the message sending module 107; and if the host is not holding a conference, the conference access module 105 sends an instruction of connecting the calling terminal with the called terminal to the message sending module 107.

The message receiving module 106 receives the call request sent by the switch controller 102, and sends the call request to the conference access module 105.

The message sending module 107 receives the instruction of connecting the calling terminal to the conference controlled by the host terminal sent by the conference access module 105, forwards the instruction to the switch controller 102, receives the instruction of connecting the calling terminal with the called terminal sent by the conference access module 105, and forwards the instruction to the switch controller 102.

The switch controller 102 further includes a message control module 109 and a conference trigger module 108.

The message control module 109 is adapted to receive and send a message, receive the call request sent by the calling terminal 103, and send the call request to the conference trigger module 108; receive the instruction of sending the call request to the AS 101 sent by the conference trigger module 108, and send the call request to the AS 101; receive the instruction sent by the conference trigger module 108 to connect the calling terminal 103 and the host terminal 104; receive the instruction of connecting the calling terminal to the conference controlled by the host terminal sent by the AS 101, and connect the calling terminal 103 to the conference controlled by the host terminal 104; and receive the instruction of connecting the calling terminal with and the called terminal sent by the AS101, and connect the calling terminal 103 and the host terminal 104.

The conference trigger module 108 receives the call request sent by the message control module 109, and determines whether the called number in the call request is a preset host number which is capable of triggering the conference access flow. If the called number in the call request is a preset host number which is capable of triggering the conference access flow, the conference trigger module 108 sends the instruction of sending the call request to the AS 101 to the message control module 109; and the called number in the call request is not a preset host number which is capable of triggering the conference access flow, the conference trigger module 108 sends the instruction of connecting the calling terminal and the called terminal to the message control module 109.

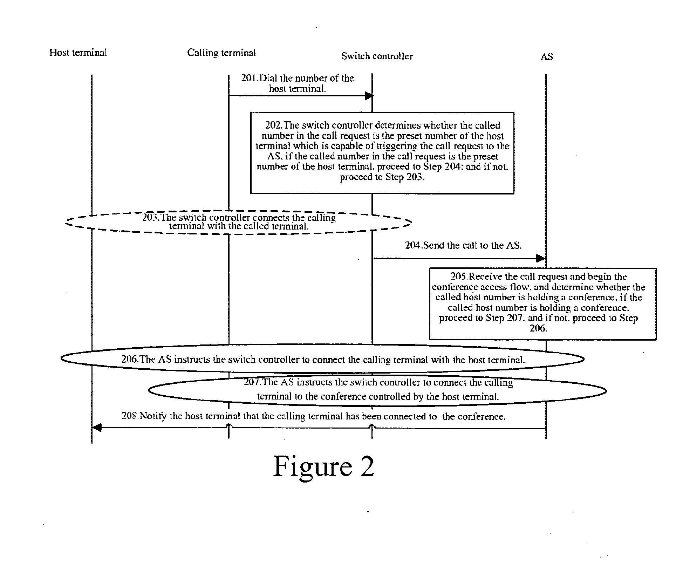

Figure 2 is a flow chart of a conference access method according to the first embodiment of the present invention.

When the calling terminal 103 in the embodiment shown in Figure 1 dials the number of the host terminal 104, the detailed flow is shown in Figure 2 as follows.

In Step 201, the calling terminal dials the number of the host terminal and sends the call request to the switch controller.

In Step 202, the switch controller determines whether the called number in the received call request is the preset number of the host terminal which is capable of triggering the call request to the AS. If the called number in the received call request is the preset number of the host terminal which is capable of triggering the call request to the AS, the process proceeds to Step 204, and otherwise, the process proceeds to Step 203.

In Step 203, the switch controller normally connects the calling terminal with the called terminal, and the flow ends.

In Step 204, the switch controller sends the call request of the calling terminal to the AS.

In Step 205, the AS receives the call request and begins the conference access flow, and determines whether the called host number is holding a conference according to stored host IDs, conference IDs, and conference state information of the conferences. If the called host number is holding a conference, the process proceeds to Step 207, and if the called host number is not holding a conference, the process proceeds to Step 206.

In Step 206, the AS sends an instruction of connecting the calling terminal with the called terminal to the switch controller, instructs the switch controller to connect the calling terminal with the called terminal, and the flow ends.

In Step 207, the AS sends an instruction of connecting the calling terminal to the conference controlled by the host terminal to the switch controller, and instructs the switch controller to connect the calling terminal to the conference controlled by the called host terminal.

In Step 208, the AS sends a notice to the host terminal through the switch controller, and notifies the host terminal that the calling terminal has been connected to the conference successfully.

The first embodiment achieves the function of automatically gaining access to the conference by dialing the host number. However, irrelevant persons sometimes are not allowed to participate in some important conferences. Therefore, in order to further prevent persons having no relation to a conference from participating in the conference by mistake through dialing the host number, after the AS determines whether the host terminal is holding a conference, the call request of the calling terminal is connected to the host terminal, and the host terminal determines whether to add the calling terminal into the conference.

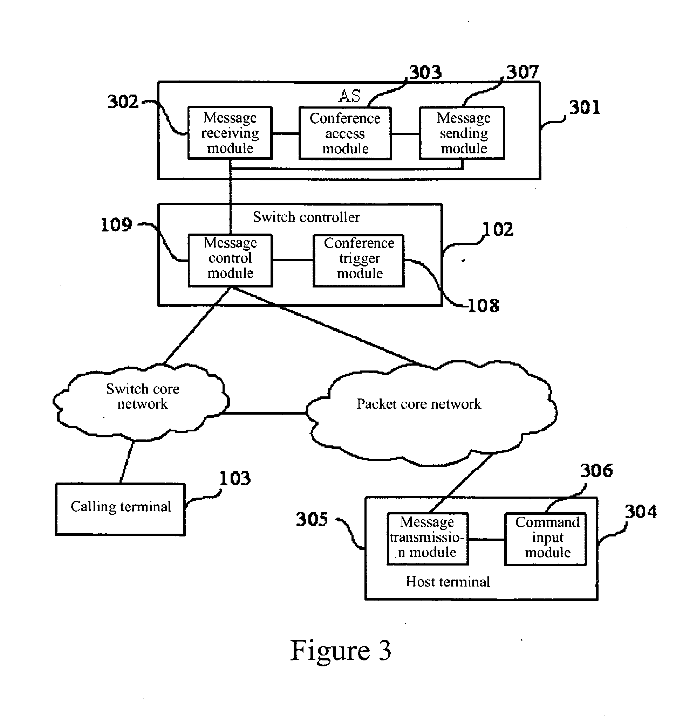

Figure 3 is a system structural view of a network multimedia conference access system according to a second embodiment of the present invention.

In order to achieve the aforementioned function, the present invention provides a system of the second embodiment, as shown in Figure 3, which includes an AS 301 and a switch controller 102.

The calling terminal 103 and the switch controller 102 have the functions described in the first embodiment. Furthermore, the switch controller 102 in this embodiment is further adapted to send a received message sent by the host terminal 304 to the AS 301; receive an instruction sent by the AS 301, and perform corresponding steps of connecting the calling terminal 103 with the host terminal 304, getting through a call of the calling terminal and the called terminal, rejecting the call request of the calling terminal 103, or connecting the calling terminal 103 to the conference controlled by the host terminal 304.

The AS 301 receives the call request of the calling terminal 103 to the host terminal 304 sent by the switch controller 102, and instructs the switch controller 102 to connect the calling terminal 103 with the host terminal 304. If receiving a reply message sent by the switch controller 102, the AS 301 instructs the switch controller 102 to get through the call of the calling terminal and the called terminal. If receiving a call rejecting message sent by the switch controller 102, the AS 301 instructs the switch controller 102 to reject the call request of the calling terminal 103. If receiving a call ending message sent by the switch controller 102, the AS 301 instructs the switch controller 102 to end the call between the calling terminal 103 and the host terminal 304. If receiving a notice of allowing to connect the calling terminal to the conference transparently transmitted by the host terminal 304 through the switch controller 102, the AS 301 sends an instruction of connecting the calling terminal to the conference controlled by the host terminal to the switch controller 102.

In the AS 301, the conference access module 303 records the host number, the conference ID, and the conference state information in real time, receives the call request of the calling terminal 103 to the host terminal 304 sent by the message receiving module 302, and sends the instruction of connecting the call request to the host terminal to the message sending module 307. If receiving the reply message sent by the message receiving module 302, the conference access module 303 sends the instruction of getting through the call of the calling terminal and the called terminal to the message sending module 307. If receiving the call rejecting message sent by the message receiving module 302, the conference access module 303 sends the instruction of rejecting the call request of the calling terminal to the message sending module 307. If receiving the call ending message sent by the message receiving module 302, the conference access module 303 sends an instruction of ending the call between the calling terminal and the host terminal to the message sending module 307. If receiving the notice of allowing connecting the calling terminal to the conference sent by the message receiving module 302, the conference access module 303 sends the instruction of connection.

The message receiving module 302 receives the call request sent by the switch controller 102 and forwards the call request to the conference access module 303; receives the reply message sent by the switch controller 102 and forwards the reply message to the conference access module 303; receives the call rejecting message sent by the switch controller 102 and forwards the call rejecting message to the conference access module 303; receives the call ending message sent by the switch controller 102 and forwards the call ending message to the conference access module 303; receives the notice of allowing to connect the calling terminal to the conference controlled by the host terminal transparently transmitted by the host terminal 304 through the switch controller 102 and forwards the notice to the conference access module 303.

The message sending module 307 receives the instruction of connecting the calling terminal 103 with the host terminal 304 sent by the conference access module 303 and forwards the instruction to the switch controller 102; receives the instruction of getting through the call of the calling terminal and the called terminal sent by the conference access module 303 and forwards the instruction to the switch controller 102; receives the instruction of rejecting the call request of the calling terminal sent by the conference access module 303, and sends the instruction to the switch controller 102; receives the instruction of ending the call between the calling terminal and the host terminal sent by the conference access module 303 and sends the instruction tp the switch controller 102; receives the instruction of connecting the calling terminal to the conference controlled by the host terminal sent by the conference access module 303 and sends the instruction to the switch controller 102.

The host terminal 304 further includes a message transmission module 305 and a command input module 306.

The message transmission module 305 receives the call request sent by the switch controller 102 and forwards the call request to the command input module 306; receives the reply message sent by the command input module 306 and forwards the reply message to the switch controller 102; receives the call rejecting message sent by the command input module 306 and forwards the call rejecting message to the switch controller 102; receives the call ending message sent by the command input module 306 and forwards the call ending message to the switch controller 102; receives the notice of connecting the calling terminal to the conference sent by the command input module 306 and sends the notice to the switch controller 102.

When receiving the call request from the message transmission module 305, the command input module 306 prompts a terminal user to select to answer a call, reject a call, or allow connecting the calling terminal to the conference. If receiving a call rejecting command selected by the terminal user, the command input module 306 sends a call rejecting message to the message transmission module 305. If receiving the command of allowing to connect the calling terminal to the conference selected by the terminal user, the command input module 306 generates a notice of allowing to connect the calling terminal to the conference controlled by host terminal, and sends the notice to the message transmission module 305. If receiving a call answering command selected by the terminal user, the command input module 306 sends the reply message to the message transmission module 305. After the call has been established, the command input module 306 further prompts the terminal user to select to end the call or allow connecting the calling terminal to the conference controlled by the host terminal. If receiving the call ending command selected by the terminal user, the command input module 306 sends the call ending message to the message transmission module 305. If receiving the command of allowing to connect the calling terminal to the conference controlled by the host terminal selected by the terminal user, the command input module 306 generates the notice of allowing to connect the calling terminal to the conference controlled by the host terminal and sends the notice to the message transmission module 305.

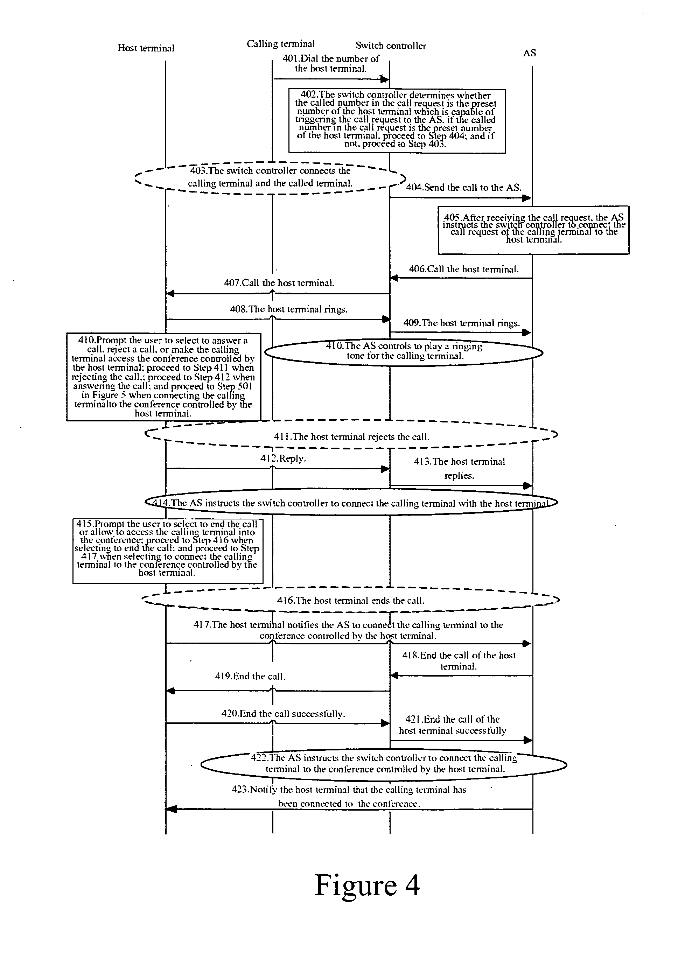

Figure 4 is a flow chart of the conference access method according to the second embodiment of the present invention.

When the calling terminal 103 in the embodiment of Figure 3 dials the number of the host terminal 304 as a calling terminal, the specific conference access flow is shown in Figure 4 as follows.

Steps 401-404 are identical to the Steps 201-204 in the first embodiment, and will not be repeated any more.

In Step 405, after receiving the call request, the AS sends the instruction of connecting the calling terminal with the called terminal to the switch controller, and instructs the switch controller to connect the calling terminal with the host terminal.

Steps 406-409 show the detailed processes of the AS instructing the switch controller to connect the calling terminal with the host terminal, and are described as follows.

In Step 406, the AS sends the call request to the host terminal to the switch controller.

In Step 407, the switch controller sends the call request to the host terminal

In Step 408, the host terminal sends a ringing message to the switch controller.

In Step 409, the switch controller sends the ringing message of the host terminal to the AS.

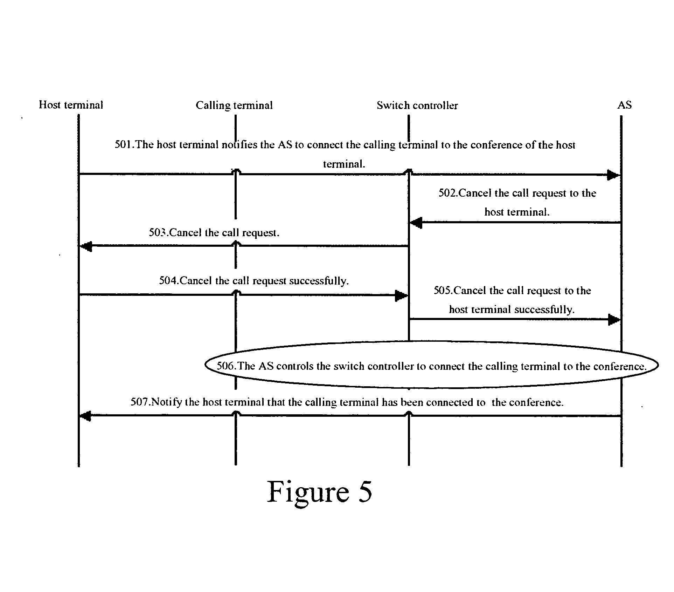

In Step 410, the AS controls a ring-playing device, such as a Media Resource Server (MRS), so as to play a ringing tone for the calling terminal. Meanwhile, the host terminal prompts the terminal user to select to answer a call, reject a call, or allow connecting the calling terminal to the conference controlled by the host terminal. If receiving the call rejecting command selected by the terminal user, the process proceeds to Step 411. If receiving a call answering comment selected by the terminal user, the process proceeds to Step 412. If receiving the command of allowing to connect the calling terminal to the conference selected by the terminal user, the process proceeds to Step 501 in Figure 5.

In Step 411, the host terminal returns the call rejecting message to the switch controller and rejects the call request of the calling terminal, thereby ending the flow.

In Step 412, the host terminal sends the reply message to the switch controller.

In Step 413, the switch controller sends the reply message of the host terminal to the AS.

In Step 414, the AS instructs the switch controller to establish the call between the calling terminal and the host terminal.

In Step 415, after the call between the calling terminal and the host terminal has been established, the host terminal prompts the terminal user to select to end the call or allow connecting the calling terminal to the conference. If receiving the call ending command selected by the terminal user, the process proceeds to Step 416. If receiving the command of allowing to connect the calling terminal to the conference selected by the terminal user, the process proceeds to Step 417.

In Step 416, the host terminal sends a call ending message to the switch controller, ends the call with the calling terminal, and the flow ends as well.

Steps 417-423 are the steps of the host terminal answering the call and notifying the AS to connect the calling terminal to the conference controlled by the host terminal, and are described as follows.

In Step 417, the host terminal generates a notice of connecting the calling terminal to the conference, and transparently transmits the notice to the AS through the switch controller.

In Step 418, the AS sends a message of ending the call of the host terminal to the switch controller.

In Step 419, the switch controller sends the call ending message to the host terminal.

In Step 420, the host terminal sends a message of ending the call successfully to the switch controller.

In Step 421, the switch controller sends a message of ending the call of the host terminal successfully to the AS.

In Step 422, the AS sends the instruction of connecting the calling terminal to the conference to the switch controller, and instructs the switch controller to connect the calling terminal to the conference controlled by the host terminal

In Step 423, the AS transparently transmits a notice to the host terminal through the switch controller, and notifies the host terminal that the calling terminal has been connected to the conference successfully.

In Steps 410 and 415, the operation of prompting the user of the host terminal to connect the calling terminal to the conference, if a conference system allows the host terminal to hold multiple conferences at the same time, after the user of the host terminal selects to connect the calling terminal to the conference, the user of the host terminal is further prompted to select the list of conferences which the calling terminal may be connected to, and the user of the host terminal may select to connect the calling terminal to a specified conference.

Figure 5 is a branch flow chart of the conference access method according to the second embodiment of the present invention.

In Step 410, the processes of the host terminal selecting to connect the calling terminal to the conference held by the host terminal according to the prompt is shown in Figure 5, and the specific steps are described as follows.

In Step 501, the host terminal transparently transmits the generated notice of connecting the calling terminal to the conference to the AS through the switch controller.

Steps 502-505 are the steps for the AS to normally cancel the call request of the calling terminal to the host terminal.

In Step 502, the AS sends a message of canceling the call request to the host terminal to the switch controller.

In Step 503, the switch controller sends a message of canceling the call request to the host terminal.

In Step 504, the host terminal sends a message of canceling the call request successfully to the switch controller.

In Step 505, the switch controller sends a message of canceling the call request to the host terminal successfully to the AS.

In Step 506, the AS sends an instruction of connecting the calling terminal to the conference to the switch controller, and instructs the switch controller to connect the calling terminal to the conference controlled by the host terminal.

In Step 507, the AS transparently transmits a notice to the host terminal through the switch controller and notifies the host terminal that the calling terminal has been connected to the conference successfully.

The notice in Steps 417 and 501 is adapted to enable the AS to perform the operation of connecting the calling terminal to the conference. The notice needs to be supported by a message carrying a message body of an extensible markup language (XML) or TEXT format in a content field, such as INFO, MESSAGE, REFER, or NOTIFY messages in a session initialize protocol (SIP). As long as relevant information is filled in the message body carried in the messages, the commands to be executed by the AS may be notified to the AS. The detailed contents to be filled in the message body are as follows.

```
    <inf>
    <cmd>2021 </cmd>
    <id>3405</id>
    <account>025400694</account
    <attendee>0257880011</attendee>
    </inf>
```

The specific parameters are described as follows.

The parameter Cmd represents a command code. Different codes represent different operations, so that the AS may know which operation is desired. For example, 2021 represents the operation of connecting the calling terminal to the conference. Of course, the command code may be defined freely.

The parameter Id represents the conference ID and identifies which conference the calling terminal should participate in. If the conference system allows one host terminal to hold multiple conferences at the same time, the terminal should carry the parameter in the notice to indicate the conference which the calling terminal should participate in. If the conference system limits one host number to hold only one conference, the parameter may be omitted.

The parameter Account represents the number or an account of the host terminal.

The parameter Attendee represents the number of the calling terminal, that is, the number of the terminal to participate in the conference.

Therefore, the meaning of the aforementioned notice lies in telling the AS to execute the command code 2021 to connect the calling terminal to the conference, and connect the calling terminal with the number 0257880011 to the conference with the conference ID 3405 held by the host terminal with the number 025400694.

The host terminal of the conference to be connected to may also be placed in a From header field of the message, and the calling number may also be placed in the to header field of the message. In this manner, in the message body, the account of the host and the attendee of the participants may not be filled in. The message is generated by an access control module in the host terminal according to the selection of the terminal user.

In view of the above, the embodiments both describe the conference system which calls by numbers. However, in fact, the conference system may adopt various calling forms, such as calling by bynames, calling by E-MAIL addresses, and calling by Internet Protocols (IP) addresses. Different calling methods are merely caused by different user IDs, and the embodiments of the present invention do not aim at limiting the calling methods for connecting to a conference. In addition, the embodiments of the present invention merely involve the connecting of conference calls, but do not involve specific conference forms. No matter what the conference form is, such as voice conferences or multimedia data cooperative conferences, participants all can apply the present invention.

Of course, the application server in the embodiments may be replaced by a device or a system with the same functions, such as Service Control Point (SCP) or PARLAY servers which may replace the application server. The servers for controlling the conference may be generally called "control servers." The switch controller may also be replaced by the device or system with the same functions, such as softswitch, and the devices and systems for controlling switch are generally called "switch controller." Additionally, the devices may be connected in a wired or wireless manner. Networks that the switch controller is connected to may include IP Multimedia Subsystem (IMS) and other networks. In addition, the SIP protocol in this embodiment may also be Hypertext Transfer Protocol (HTTP), or H.248 protocol, and may also be a proprietary protocol. In fact, the embodiments of the present invention do not limit specific protocols and message formats. Therefore, the present invention has many other embodiments. The aforementioned equivalent replacements or improvements may become the embodiments of the present invention.

The aforementioned embodiments both achieve the function of connecting a terminal to a conference by dialing the number of a host. In the first embodiment, the host needs not to execute any operation, and the application server connects the calling terminal to the conference by determining the state of the host, thereby achieving the objective of gaining access to the conference conveniently and rapidly. In the second embodiment, the application server connects an incoming call to the host terminal, so that the host terminal and the application server cooperate to connect the calling terminal to the conference, thereby not only achieving the objective of connecting to the conference conveniently and rapidly, but also preventing the calling terminal from attending a conference by mistake.

Those of ordinary skill in the art may understand that all or a part of steps in the various methods in the aforementioned embodiments may be finished by a program instructing relevant hardware. The program may be stored in a computer accessible storage medium, including ROM, RAM, magnetic disks, or optical disks.

## Claims

1. A network multimedia conference access method, comprising:
receiving, by a switch controller, (102) a call request from a calling terminal (103) ;
determining, by the switch controller, (102) whether a called terminal user identification, ID, in the call request is a preset host user ID which is capable of triggering a conference access flow;
sending the call request to the host terminal (104) corresponding to a preset host user ID if the called terminal user ID in the call request is the preset host user ID which is capable of triggering the conference access flow;
prompting, by the host terminal, (104) a user of the host terminal (104) to select the list of conferences which the calling terminal (103) will be connected to when a conference system allows the host terminal (104) to hold multiple conferences at the same time;
receiving a notice of allowing to connect the calling terminal (103) to a conference, wherein the notice is generated according to the selection of the user of the host terminal and returned by the host terminal, and the notice comprises a command code of connecting the calling terminal (103) to the conference, a user ID of the host terminal, (104) a user ID of the calling terminal (103) and a conference ID of the conference selected by the user of the host terminal (104) when the system allows the host terminal (104) to hold multiple conferences at the same time; and
connecting, by a switch controller (102), the calling terminal (103) to the conference controlled by the host terminal (104).

2. The network multimedia conference access method according to claim 1, wherein the notice of allowing to connect the calling terminal to the conference is realized by a message capable of carrying in a content field a message body of an extensible markup language or a text form.

3. The network multimedia conference access method according to claim 2, wherein the notice of allowing to connect the calling terminal to the conference is one of INFO, MESSAGE, REFER, and NOTIFY messages in a Session Initialize Protocol ,SIP.

4. A network multimedia conference access system, comprising a host terminal (104), a switching controller (102) and a control server (101);
wherein the switch controller (102) is adapted to receive a call request from a calling terminal, (103) determine whether a called user identification, ID, in the call request is a preset host user ID capable of triggering a conference access flow, and send the call request to the control server (101) if the called user ID in the call request is the preset host user ID capable of triggering the conference access flow;
the control server (101) is adapted to receive the call request sent by the switch controller (102), send the call request to the host terminal corresponding to a preset host user ID, receive a notice of allowing to connect the calling terminal (103) to a conference, which comprises a command code of connecting the calling terminal (103) to the conference, a user ID of the host terminal, (104) a user ID of the calling terminal (103) and a conference ID of the conference selected by the user of the host terminal (104) when the system allows the host terminal to hold multiple conferences at the same time, and instruct the switch controller (102) to connect the calling terminal to the conference controlled by a host terminal if the call request satisfies a conference access condition; and
the host terminal (104) is adapted to prompt a user of the host terminal (104) to select the list of conferences which the calling terminal will be connected to when a conference system allows the host terminal (104) hold multiple conferences at the same time, generate the notice of allowing to connect the calling terminal to (103) to the conference according to the selection of the user of the host terminal (104) and return the notice to the control server.

## Patentansprüche

1. Netzwerk-Multimedia-Konferenzzugangsverfahren, umfassend:
Empfangen einer Anrufanforderung durch eine Vermittlungssteuerung (102) von einem anrufenden Endgerät (103);
Bestimmen durch die Vermittlungssteuerung (102), ob eine Benutzeridentifikation ID des angerufenen Endgeräts in der Anrufanforderung eine voreingestellte Host-Benutzer-ID ist, die einen Konferenzzugangsfluss triggern kann;
Senden der Anrufanforderung zu dem Host-Endgerät (104), das einer voreingestellten Host-Benutzer-ID entspricht, wenn die Benutzer-ID des angerufenen Endgeräts in der Anrufanforderung die voreingestellte Host-Benutzer-ID ist, die den Konferenzzugangsfluss triggern kann;
Auffordern eines Benutzers des Host-Endgeräts (104) durch das Host-Endgerät (104), die Liste von Konferenzen auszuwählen, mit denen das anrufende Endgerät (103) verbunden werden wird, wenn ein Konferenzsystem dem Host-Endgerät (104) erlaubt, zur gleichen Zeit mehrere Konferenzen abzuhalten;
Empfangen eines Vermerks des Erlaubens, das anrufende Endgerät (103) mit einer Konferenz zu verbinden, wobei der Vermerk gemäß der Auswahl des Benutzers des Host-Endgeräts erzeugt und durch das Host-Endgerät zurückgegeben wird und der Vermerk einen Befehlscode des Verbindens des anrufenden Endgeräts (103) mit der Konferenz, eine Benutzer-ID des Host-Endgeräts (104), eine Benutzer-ID des anrufenden Endgeräts (103) und eine Konferenz-ID der durch den Benutzer des Host-Endgeräts (104) ausgewählten Konferenz umfasst, wenn das System dem Host-Endgerät (104) erlaubt, zur gleichen Zeit mehrere Konferenzen abzuhalten; und
Verbinden des anrufenden Endgeräts (103) durch eine Vermittlungssteuerung (102) mit der durch das Host-Endgerät (104) gesteuerten Konferenz.

2. Netzwerk-Multimedia-Konferenzzugangsverfahren nach Anspruch 1, wobei der Vermerk des Erlaubens, das anrufende Endgerät mit der Konferenz zu verbinden, durch eine Nachricht realisiert wird, die in der Lage ist, in einem Inhaltsfeld einen Nachrichtenhauptteil einer Extensible Markup Language oder einer Textform zu führen.

3. Netzwerk-Multimedia-Konferenzzugangsverfahren nach Anspruch 2, wobei der Vermerk des Erlaubens, das anrufende Endgerät mit der Konferenz zu verbinden, eine der Nachrichten INFO, MESSAGE, REFER und NOTIFY in einem Session Initialize Protocol SIP ist.

4. Netzwerk-Multimedia-Konferenzzugangssystem, das ein Host-Endgerät (104), eine Vermittlungssteuerung (102) und einen Steuerserver (101) umfasst;
wobei die Vermittlungssteuerung (102) dafür ausgelegt ist, eine Anrufanforderung von einem anrufenden Endgerät (103) zu empfangen, zu bestimmen, ob eine Identifikation ID des angerufenen Benutzers in der Anrufanforderung eine voreingestellte Host-Benutzer-ID ist, die einen Konferenzzugangsfluss trigger kann, und die Anrufanforderung zu dem Steuerserver (101) zu senden, wenn die ID des angerufenen Benutzers in der Anrufanforderung die voreingestellte Host-Benutzer-ID ist, die den Konferenzzugangsfluss triggern kann;
der Steuerserver (101) dafür ausgelegt ist, die durch die Vermittlungssteuerung (102) gesendete Anrufanforderung zu empfangen, die Anrufanforderung zu dem Host-Endgerät zu senden, die einer voreingestellten Host-Benutzer-ID entspricht, einen Vermerk des Erlaubens zu empfangen, das anrufende Endgerät (103) mit einer Konferenz zu verbinden, der einen Befehlscode des Verbindens des anrufenden Endgeräts (103) mit der Konferenz, eine Benutzer-ID des Host-Endgeräts (104), eine Benutzer-ID des anrufenden Endgeräts (103) und eine Konferenz-ID der durch den Benutzer des Host-Endgeräts (104) ausgewählten Konferenz umfasst, wenn das System dem Host-Endgerät (104) erlaubt, zur gleichen Zeit mehrere Konferenzen abzuhalten, und die Vermittlungssteuerung (102) anzuweisen, das anrufende Endgerät (103) mit der durch ein Host-Endgerät (104) gesteuerten Konferenz zu verbinden, wenn die Anrufanforderung eine Konferenzzugangsbedingung erfüllt; und das Host-Endgerät (104) dafür ausgelegt ist, einen Benutzer des Host-Endgeräts (104) aufzufordern, die Liste von Konferenzen auszuwählen, mit denen das anrufende Endgerät (103) verbunden werden wird, wenn ein Konferenzsystem dem Host-Endgerät (104) erlaubt, zur gleichen Zeit mehrere Konferenzen abzuhalten, gemäß der Auswahl des Benutzers des Host-Endgeräts (104) den Vermerk zu erzeugen, zu erlauben, das anrufende Endgerät (103) mit der Konferenz zu verbinden, und den Vermerk an den Steuerserver zurückzugeben.

## Revendications

1. Procédé d'accès de conférence multimédia de réseau, comprenant :
la réception, par un contrôleur de commutation (102), d'une requête d'appel provenant d'un terminal appelant (103) ;
la détermination, par le contrôleur de commutation (102), qu'une identification d'utilisateur de terminal appelé, ID, dans la requête d'appel est ou non une ID d'utilisateur hôte préétablie capable de déclencher un flux d'accès de conférence ;
l'envoi de la requête d'appel au terminal hôte (104) correspondant à une ID d'utilisateur hôte préétablie si l'ID d'utilisateur du terminal appelé dans la requête d'appel est l'ID d'utilisateur hôte préétablie capable de déclencher le flux d'accès de conférence ;
l'incitation, par le terminal hôte (104), d'un utilisateur du terminal hôte (104) à sélectionner la liste des conférences auxquelles le terminal appelant (103) sera connecté quand un système de conférence autorise le terminal hôte (104) à tenir de multiples conférences simultanément ;
la réception d'un avis d'autorisation de connexion du terminal appelant (103) à une conférence, l'avis étant généré en fonction de la sélection de l'utilisateur du terminal hôte et renvoyé par le terminal hôte, et l'avis comprenant un code de commande de connexion du terminal appelant (103) à la conférence, une ID d'utilisateur du terminal hôte (104), une ID d'utilisateur du terminal appelant (103) et une ID de conférence de la conférence sélectionnée par l'utilisateur du terminal hôte (104) quand le système autorise le terminal hôte (104) à tenir de multiples conférences simultanément ; et
la connexion, par un contrôleur de commutation (102), du terminal appelant (103) à la conférence commandée par le terminal hôte (104).

2. Procédé d'accès de conférence multimédia de réseau selon la revendication 1, dans lequel l'avis d'autorisation de connexion du terminal appelant à la conférence est réalisé par un message capable de porter dans un champ de contenu un corps de message d'un langage de balisage extensible ou un formulaire de texte.

3. Procédé d'accès de conférence multimédia de réseau selon la revendication 2, dans lequel l'avis d'autorisation de connexion du terminal appelant à la conférence est l'un des messages INFO, MESSAGE, REFER et NOTIFY dans un Protocole d'Initialisation de Session, SIP.

4. Système d'accès de conférence multimédia de réseau, comprenant un terminal hôte (104), un contrôleur de commutation (102) et un serveur de commande (101) ;
dans lequel le contrôleur de commutation (102) est adapté pour recevoir une requête d'appel depuis un terminal appelant (103), déterminer qu'une identification d'utilisateur appelé, ID, dans la requête d'appel est ou non une ID d'utilisateur hôte préétablie capable de déclencher un flux d'accès de conférence, et envoyer la requête d'appel au serveur de contrôle (101) si l'ID d'utilisateur appelé dans la requête d'appel est l'ID d'utilisateur hôte préétablie capable de déclencher le flux d'accès de conférence ;
le serveur de contrôle (101) est adapté pour recevoir la requête d'appel envoyée par le contrôleur de commutation (102), envoyer la requête d'appel au terminal hôte correspondant à une ID d'utilisateur hôte préétablie, recevoir un avis d'autorisation de connexion du terminal appelant (103) à une conférence, lequel comprend un code de commande de connexion du terminal appelant (103) à la conférence, une ID d'utilisateur du terminal hôte (104), une ID d'utilisateur du terminal appelant (103) et une ID de conférence de la conférence sélectionnée par l'utilisateur du terminal hôte (104) quand le système autorise le terminal hôte (104) à tenir de multiples conférences simultanément, et donner l'instruction au contrôleur de commutation (102) de connecter le terminal appelant (103) à la conférence commandée par un terminal hôte (104) si la requête d'appel satisfait à une condition d'accès de conférence ; et
le terminal hôte (104) est adapté pour inciter un utilisateur du terminal hôte (104) à sélectionner la liste des conférences auxquelles le terminal appelant (103) sera connecté quand un système de conférence autorise le terminal hôte (104) à tenir de multiples conférences simultanément, générer l'avis d'autorisation de connexion du terminal appelant (103) à la conférence en fonction de la sélection de l'utilisateur du terminal hôte (109) et renvoyer l'avis au serveur de contrôle.
